# EUROPÄISCHE PATENTSCHRIFT

(11) **EP 0 621 670 B1**
(45) Veröffentlichungstag und Bekanntmachung des Hinweises auf die Patenterteilung: **28.01.1998**
(21) Anmeldenummer: 94105243.3
(22) Anmeldetag: 05.04.1994
(51) Int. Cl.: H02B 11/12, H01H 71/08

(54) **Schalter mit Hilfsstromkreisen**
Circuit breaker with auxiliary circuits
Disjoncteur aux circuits auxiliaires

(30) Priorität: 21.04.1993 IT MI930787; 21.04.1993 IT MI930786
(43) Veröffentlichungstag der Anmeldung: 26.10.1994
(73) Patentinhaber: ABB SACE S.p.A., I-24100 Bergamo (IT)
(72) Erfinder: Dosmo, Renato, I-24100 Bergamo (IT); Mairati, Giovanni, I-24100 Bergamo (IT)
(74) Vertreter: Kaiser, Helmut, Dr.

(56) Entgegenhaltungen:
- EP-A- 0 133 152
- US-A- 4 477 701
- US-A- 4 761 521

## Beschreibung

Bei der Erfindung wird ausgegangen von einem Schaltgerät, insbesondere einem Niederspannungs-Leistungsschalter, mit einem in einem Schaltschrank angeordneten und Stromversorgungs- und Stromverteilungsklemmen enthaltenden feststehenden Teil, einem beweglichen Gehäusekörper zur Aufnahme eines Schaltermechanismus und einer ersten Zusatzvorrichtung mit einem elektrischen Hilfsstromkreis, welcher durch eine vom feststehenden Teil auf den Gehäusekörper geführte Verdrahtung mit Strom versorgt wird, und mit einer Trennvorrichtung, welche durch Verschieben des Gehäusekörpers im Schaltgerät eine Trennstelle (Trennstellung) oder eine galvanische Verbindung von feststehendem Teil und Gehäusekörper (Einfahrstellung) hervorruft.

Ein derartiges Schaltgerät ist bevorzugt ein Niederspannungs-Leistungsschalter mit Nennströmen zwischen 100 A und einigen kA. Das Schaltgerät ist üblicherweise in einem Schaltschrank angeordnet und kann dort eine Trenn- oder eine Einfahrstellung einnehmen. Einfahr- bzw. Trennstellung bedeutet hierbei eine Stellung des Schaltgerätes, in der ein die Leistungskontakte des Schaltgerätes enthaltender Gehäusekörper galvanisch verbunden bzw. getrennt ist von Kontaktstücken für die Stromversorgung und für die Stromverteilung. Diese Kontaktstücke befinden sich in einem im Schaltschrank montierten feststehenden Teil des Schaltgerätes.

Im Schaltgerät sind Hilfstromkreise aufweisende Zusatzvorrichtungen, wie zum Beispiel Hilfsmeldekontakte, Überstrom-und/oder Überspannungsschutzvorrichtungen, und/oder Steuervorrichtungen, montiert, die mit Stromversorgungskreisen des Schaltschranks verdrahtet werden müssen. Die hierzu benötigten Drähte werden üblicherweise an einer Seitenfläche des vorzugsweise kastenförmigen Schaltergehäuses geführt und bilden so ein Drahtbündel, das beim Trennen oder Einfahren des Schaltgerätes an eine im Schaltschrank vorgesehene Steckdose angeschlossen werden muss. Hierbei ist es jedoch notwendig, beim Trennen oder Einfahren die Verbindung der Kabel manuell zu lösen. Ein solches Drahtbündel stellt ein Hindernis für einen Monteur beim Installieren oder Arten des Schaltschranks dar, da er bei der Durchführung einer bestimmten Reihenfolge von Operationen beständig darauf achten muss, dass die frei beweglichen Drähte nicht abgerissen oder beschädigt werden. Darüber hinaus besteht ein zusätzliches Risiko darin, dass die Hilfsstromkreise gegebenenfalls unter Spannung stehen.

In der US 4,761,521 wird eine Schaltanlage mit einem beweglichen Niederspannungs-Schalter beschrieben, der in einen feststehenden, stromführenden Teil hineingeschoben werden kann. Bei der Verbindung werden ein primärer Stromkreis über Klemmen und ein Hilfsstromkreis über eine Steckverbindung geschlossen.

Die EP 0 133 152 A1 beschreibt eine Anordnung zum Anschluss von Hilfsleitungen an einen Leistungsschalter mittels einer Klemmleiste. Der Leistungsschalter kann in einem Einschubrahmen ausfahrbar angeordnet sein. Der Kontakt erfolgt über eine Kontaktblock mit Kontaktstiften, die in die Klemmleiste eingreifen.

Der Erfindung, wie sie in Patentanspruch 1 definiert ist, liegt die Aufgabe zugrunde, ein Schaltgerät der eingangs genannten Art anzugeben, welches sich durch einen geringen Raumbedarf auszeichnet und welches zugleich problemlos gewartet und montiert werden kann.

Das Schaltgerät nach der Erfindung kann äusserst platzsparend im Schaltschrank untergebracht werden. Dies ist zum einen dadurch bedingt, dass die die Stromversorgung der Zusatzvorrichtungen sicherstellenden Drähte ins Gehäuse des Schaltgerätes eingebaut sind, zum anderen aber auch dadurch, dass beim Einfahren bzw. Trennen des Schaltgerätes die Drähte automatisch an eine Stromquelle angeschlossen bzw. davon getrennt werden und somit kein Platz mehr für manuell auszuführende Verdrahtungsarbeiten benötigt wird.

Von besonderem Vorteil ist es, dass der bewegliche Gehäusekörper 20 gewartet werden kann, ohne dass eine direkte Kontaktnahme mit den Hauptstromkreisen möglich ist. Darüber hinaus wird der Raumbedarf mehrerer in einer Anlage nebeneinander angeordneter Schaltgeräte 1 verringert.

Nachfolgend werden bevorzugte Ausführungsbeispiele der Erfindung anhand von Zeichnungen näher beschrieben. Hierbei zeigt:
- Fig.1: eine perspektivische Darstellung des erfindungsgemässen Schaltgerätes, bei der dessen wesentlichen Bestandteile voneinander getrennt sind,
- Fig.2: eine Aufsicht auf einen Schnitt durch ein in einem Sitz gehaltenes Verbindungsteil des Schaltgerätes gemäss Fig.1,
- Fig.3: eine Aufsicht auf den längs A-A geschnittenen Sitz gemäss Fig.2,
- Fig.4: eine perspektivische Ansicht des Schaltgerätes gemäss Fig.1 mit einer als Strommessgerät ausgebildeten Zusatzvorrichtung,
- Fig.5: das Schaltgerät gemäss Fig.4, bei dem wesentliche Bestandteile voneinander getrennt dargestellt sind,
- Fig.6: ein Blockdiagramm des Strommessgerätes gemäss Fig.4.

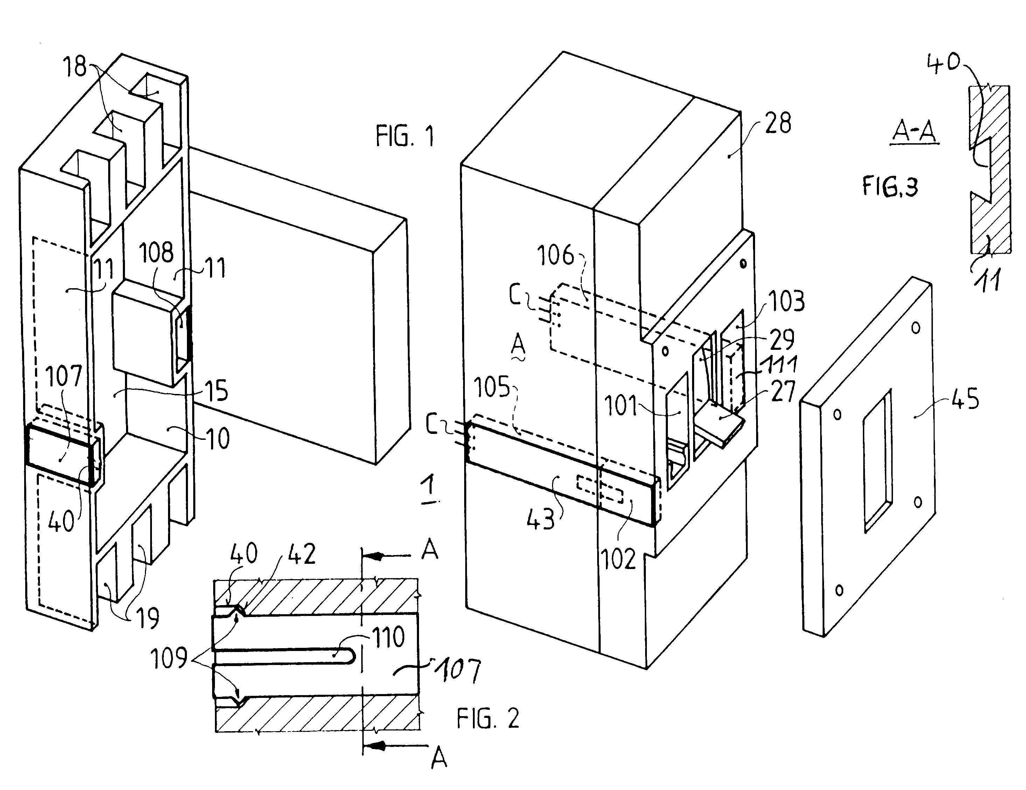

In allen Figuren bezeichnen gleiche Bezugszeichen gleichwirkende Teile. In Fig.1 ist eine Ausführungsform eines erfindungsgemässen Schaltgerätes 1 mit einem feststehenden Teil 10 und einem beweglichen Gehäusekörper 20 dargestellt, bei der das Teil 10, der bewegliche Gehäusekörper 20 und eine Abdeckung 45 des beweglichen Gehäusekörper 20 voneinander getrennt sind. Das feststehenden Teil 10 weist oben bzw. unten Ausnehmungen 18 bzw. 19 für nicht dargestellte Anschlussklemmen auf, die mit einer Stromquelle bzw. mit einem Stromverbraucher verbunden werden können. In der Mitte ist im feststehenden Teil 10 ein von Seitenwände 11 begrenzter Raum 15 ausgespaart, in dem ein feststehendes Teil einer nicht dargestellten Trennvorrichtung untergebracht ist, welche durch Verschieben des Gehäusekörpers 20 im Schaltgerät 1 eine Trennstelle (Trennstellung) oder eine galvanische Verbindung von feststehendem Teil 10 und Gehäusekörper 20 (Einfahrstellung) hervorrufen kann.

Im beweglichen Gehäusekörper 20 ist der eigentliche Schaltermechanismus mit Leistungskontakten und einem Antrieb untergebracht. Zur Vereinfachung der Darstellung ist lediglich ein der Betätigung des Schaltgerätes 1 diendender Schalthebel 27 angegeben, der aus einer in der Mitte einer Frontabdeckung 28 vorgesehenen Öffnung 29 herausragt. In seitlich der Öffnung 29 vorgesehenen Ausnehmungen 101 und 103 der Frontabdeckung 28 sind nicht dargestellte Zusatzvorrichtungen mit Hilfsstromkreisen dargestellt. Solche Zusatzvorrichtungen können Unterspannungsauslöser sein, die in der Ausnehmung 101 untergebracht sind, und Hilfskontakte und/oder Hilfskontakte und ein Auslöserelais, die in der Ausnehmumg 103 untergebracht sind.

Auf der Frontabdeckung 28 wird die Abdeckung 45 mit Hilfe von Schrauben befestigt. Die Abdeckung 45 ist so ausgebildet, dass sie von aussen lediglich den Zugang zum Schalthebel 27 ermöglicht und die die elektrischen Zusatzvorrichtungen aufnehmenden Ausnehmungen 101 und 103 verdeckt.

In die Seitenwand 11 des feststehenden Teils ist ein nutenförmiger Sitz 40 eingeformt zur Aufnahme eines als Steckbuchse ausgebildeten Verbindungsteils 107. Dieses Verbindungsteil 107 ist elektrisch mit den an die äussere Stromquelle anschliessbaren Klemmen 18 verbunden. In einem nutenförmigen Sitz 43 einer mit der Seitenwand 11 fluchtenden Seitenwand A des kastenförmig ausgebildeten, beweglichen Gehäusekörpers 20 ist ein einen Stecker C enthaltendes Verbindungsteil 105 untergebracht, das mit dem Hilfsstromkreis einer der Zusatzvorrichtungen galvanisch verbindbar ist. Die beiden Verbindungsteile 105 und 107 bilden eine Steckverbindung, welche beim Einfahren des Gehäusekörpers 20 in das feststehenden Teil 10 automatisch zusammengesteckt wird und sich beim Ausfahren des beweglichen Gehäusekörpers 20 aus dem feststehenden Teil 10 automatisch auftrennt.

Das Verbindungsteil 105 ist über eine weitere Steckverbindung mit einem Verbindungsteil 102 verbindbar, welches in eine Seitenwand der abnehmbaren Frontabdeckung 28 des Gehäusekörpers 3 eingesetzt ist und mit dem Hilfsstromkreis einer in der Ausnehmung 101 vorgesehenen Zusatzvorrichtung verbunden ist. Die Frontabdeckung 28 verschliesst eine dem Einbau des Schaltmechanismus und der Leistungskontakte dienende Montageöffnung des beweglichen Gehäusekörper 10. Beim Verschliessen wird die das Verbindungsteil 102 enthaltende Steckverbindung hergestellt.

Eine analoge Anordnung ist auf der gegenüberliegenden Seitenwand des Schaltgerätes 1 vorgesehen. Entsprechend den Verbindungsteilen 107, 105 und 102 ausgebildete und angeordnete Verbindungsteile 108, 106 und 111 stellen in der Einfahrstellung eine elektrische Verbindung zwischen den Stromversorgungsklemmen 18 und dem Hilfsstromkreis einer in der Ausnehmung 103 befindlichen Zusatzvorrichtung her.

Aus den Figuren 2 und 3 ist ersichtlich, wie das Verbindungsteil 107 im Sitz 40 gehalten ist. Der Sitz 40 hat - wie aus Fig.3 ersichtlich ist - Schwalbenschwanzprofil. In den Sitz 40 sind in einander gegenüberliegende Flanken zwei jeweils als Hinterschneidung 42 und in das Verbindungsteil 107 zwei jeweils als biegsame Nase 109 ausgebildete Halteteile eingeformt, welche sich beim Einschieben des Verbindungsteils 107 bis ans hintere Ende des Sitzes 40 miteinander verzahnen. Um die erforderliche elastische Verformung zu erleichtern, wird das Verbindungsteil 107 mit einem oder mehreren Längsschlitzen 110 versehen.

Das im Sitz 43 gehaltene Verbindungsteil 105 ist entsprechend ausgebildet.

Der Zusammenbau der Schaltgerätes 1 wird wie folgt ausgeführt: Bei demontierter Abdeckung 45 wird das Verbindungsteil 105 so tief in den Sitz 43 eingeschoben, bis die Nasen 109 die Hinterschneidungen 42 hintergreifen. Entsprechend werden auch die Verbindungsteil 106, 107 und 108 in den zugeordneten Sitzen fixiert. Sodann wird der bewegliche Gehäusekörper 20 mit der Frontabdeckung 28 verschlossen.

Danach werden die Zusatzvorrichtungen in den Ausnehmungen 101 und 103 positioniert und die Verbindungsteile 102 und 111 in den zugeordneten Sitzen der Frontabdeckung 28 unter Bildung leitender Verbindungen in den Seitenflächen A fixiert, wobei darauf geachtet werden muss, dass die Verbindungsteile entsprechend tief in die Sitze eingefahren und mittels der biegsamen Nasen 109 in den Hinterschneidungen 110 fixiert sind. Anschliessend wird die Abdeckung 45 montiert.

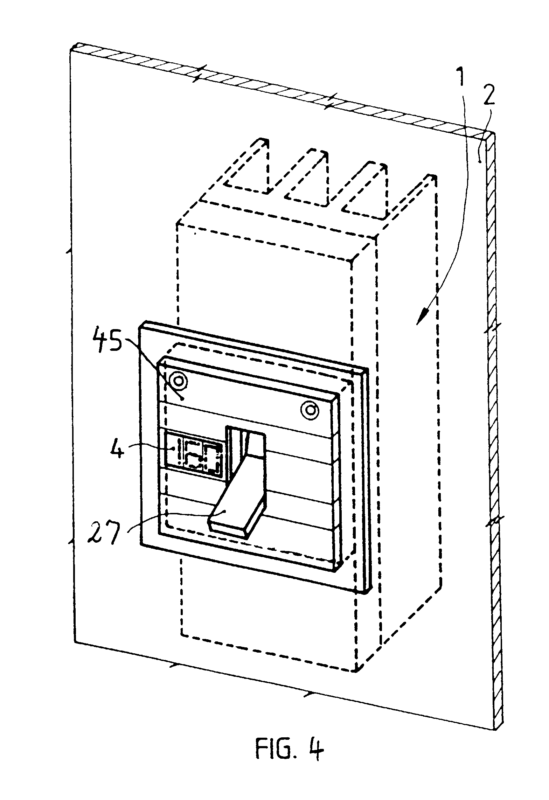

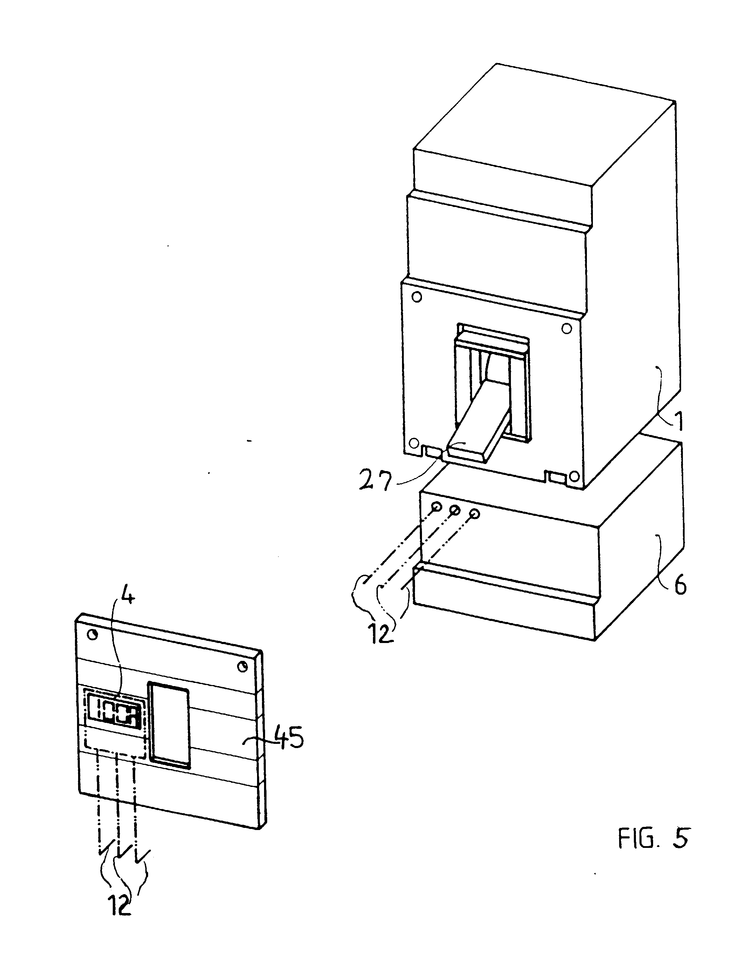

Fig.4 zeigt ein Schaltgerät 1, dessen Abdeckung 45 aus einer Tür 2 eines elektrischen Schaltschranks herausragt. Die Abdeckung 45 weist eine nicht bezeichnete Öffnung auf, durch die der Schalthebel 27 des Schaltgerätes geführt ist. An der Abdeckung 45 ist eine als Strommessgerät ausgebildete Zusatzeinrichtung mit einer digitale Anzeigevorrichtung 4 befestigt, welche kontinuierlich den Wert des durch einen Phasenleiter des Schaltgerätes 1 fliessenden Strom wiedergibt. Vorzugsweise ist die Anzeigevorrichtung 4 in der Lage, mindestens drei Ziffern darzustellen. Wie aus Fig.5 ersichtlich ist, kann die Anzeigevorrichtung 4 auch die Messeinheit - ersichtlich A für den Strom als Messgrösse - darstellen.

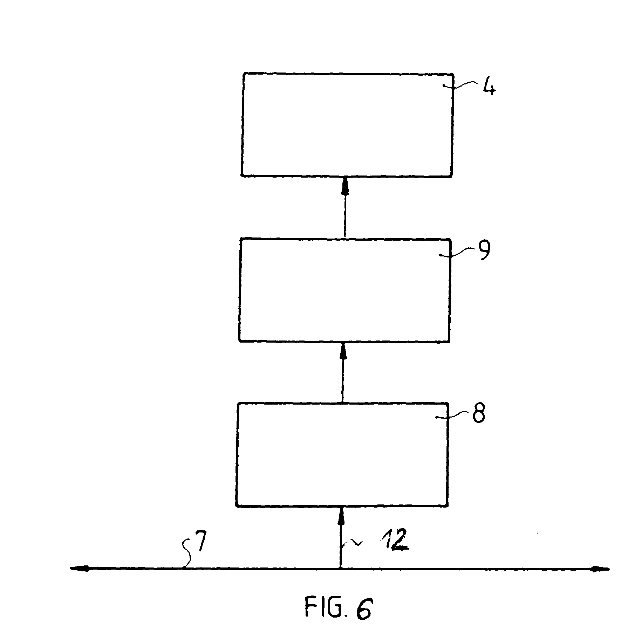

Das Strommessgerät ist - wie in Fig.5 dargestellt - über steckoder klemmbare Drähte 12 mit einer als Schutzeinheit 6 ausgebildeten Zusatzvorrichtung des Schaltgeräts 1 verbunden. Die Schutzeinheit 6 weist einen aus Fig.5 nicht ersichtlichen Hilfsstromkreis auf, der über das aus Fig.5 ebenfalls nicht ersichtliche Verbindungsteil 102 mit Strom versorgt wird. Ein Teil der Drähte 12 ist beispielsweise durch Stecken oder Klemmen galvanisch mit stromführenden Drähten des Verbindungsteils 102 verbunden und dient der Stromversorgung eines Hilfsstromkreises des Strommessgerätes. Ein anderer Teil der Drähte 12 ist über eine Steck- oder Klemmverbindung mit einem aus Fig.6 ersichtlichen Datenbus der Schutzeinheit 6 verbunden.

Dieser Datenbus 7 führt Informationen hinsichtlich des im Schaltgerät 1 fliessenden Stroms. Diese Informationen können sowohl in analoger Form als auch in digital kodierter Form vorliegen. Der Datenbus ist mit einem Logikschaltkreis 8 verbunden, der auf der Abdeckung 45 angeordet ist und in der Lage ist, die im Bus 7 vorhandenen Informationen zu kodieren und so zu verarbeiten, dass sie für die Wiedergabe auf der Anzeigevorrichtung 4 geeignet sind. Der Logikschaltkreis 8 wirkt über eine Treiberschaltung 9 auf die Anzeigevorrichtung.

Das dargestellte Strommessgerät ist vollständig in die Abdeckung 45 eingebaut und kann mit den beschriebenen steckbaren Verbindungsteilen in einfacher Weise mit Speisestrom und Messdaten versorgt werden. Das Ablesen des Stromes kann auch dann durch-geführt werden, wenn das Schaltgerät 1 in den Schaltschrank eingebaut und die Tür 2 geschlossen ist, ohne dass zusätzliche Öffnungen hergestellt werden müssen.

### Bezugszeichenliste

- 1: Schaltgerät
- 2: Tür
- 4: Anzeigevorrichtung
- 6: Schutzeinheit
- 7: Datenbus
- 8: Steuerungslogikschaltkreis
- 9: Treiberschaltung
- 9: Treiberschaltung
- 10: feststehendes Teil
- 11: Seitenwände
- 12: Drähte
- 15: Raum
- 18: Ausnehmungen für Stromversorgungsklemmen
- 19: Ausnehmungen für Stromverteilungsklemmen
- 20: beweglicher Gehäusekörper
- 27: Schalthebel
- 28: Frontabdeckung
- 29: Öffnung
- 40: Sitz
- 42: Hinterschneidungen
- 43: Sitz
- 45: Abdeckung
- 102, 105, 106 107, 108: Verbindungsteile
- 109: Nasen
- 110: Längsschlitz
- 111: Verbindungsteil
- A: Seitenwand
- C: Stecker

## Patentansprüche

1. Schaltgerät, insbesondere Niederspannungs-Leistungsschalter, mit einem in einem Schaltschrank angeordneten und Stromversorgungs- (18) und Stromverteilungsklemmen (19) enthaltenden feststehenden Teil (10), einem beweglichen Gehäusekörper (20) zur Aufnahme eines Schaltermechanismus (27) und einer ersten Zusatzvorrichtung mit einem elektrischen Hilfsstromkreis, welcher durch eine vom feststehenden Teil (10) auf den Gehäusekörper (20) geführte Verdrahtung mit Strom versorgt wird, und mit einer Trennvorrichtung, welche durch Verschieben des Gehäusekörpers (20) im Schaltgerät eine Trennstelle (Trennstellung) oder eine galvanische Verbindung von feststehendem Teil (10) und Gehäusekörper (20) (Einfahrstellung) hervorruft, wobei die Verdrahtung eine erste Steckverbindung aufweist, welche sich beim Übergang von der Einfahrstellung in die Trennstellung öffnet und beim Übergang von der Trennstellung in die Einfahrstellung schliesst, wobei die erste Steckverbindung ein an die Stromversorgungsklemmen (18) angeschlossenes, vorzugsweise als Steckbuchse ausgebildetes und in das feststehende Teil (2) eingesetztes erstes Verbindungsteil (107, 108) aufweist sowie ein mit dem Hilfsstromkreis galvanisch verbindbares, einen Stecker (C) enthaltendes zweites Verbindungsteil (105, 106) aufweist, dadurch gekennzeichnet,
dass deren miteinander zusammenwirkende Teile (105, 107; 106, 108) in einander gegenüberstehende Seitenwände (11, A) des feststehenden Teils (2) und des Gehäusekörpers (3) eingesetzt sind, dassdas zweite Verbindungsteil (105, 106) in den Gehäusekörper (3) eingesetzt ist und über eine zweite Steckverbindung mit einem dritten Verbindungsteil (102) verbindbar ist, welches in eine Seitenwand einer abnehmbaren Frontabdeckung (28) des Gehäusekörpers (3) eingesetzt ist und mit dem Hilfsstromkreis elektrisch leitend verbunden ist.

2. Schaltgerät nach Anspruch 1, dadurch gekennzeichnet, dass in die Seitenwand des feststehenden Teils (2), des Gehäusekörpers (3) und/oder der Frontabdeckung (28) des Gehäusekörpers jeweils ein der Aufnahme des zugeordneten Verbindungsteils (102, 105, 107) dienendender, nutförmig ausgebildeter Sitz (40, 43) eingeformt ist.

3. Schaltgerät nach Anspruch 2, dadurch gekennzeichnet, dass der Sitz (40, 43) hinterschnitten ausgebildet ist und vorzugsweise Schwalbenschwanzprofil aufweist.

4. Schaltgerät nach einem der Ansprüche 2 oder 3, dadurch gekennzeichnet, dass in den Sitz (40, 43) als Hinterschneidungen (42) und in das Verbindungsteil (102, 105, 107) als biegsame Nasen (109) ausgebildete Halteteile eingeformt sind, welche Halteteile sich beim Einschieben des Verbindungsteils (102, 105, 107) bis ans hintere Ende der Nut (40, 43) miteinander verzahnen.

5. Schaltgerät nach einem der Ansprüche 1 bis 4, dadurch gekennzeichnet, dass in mindestens eines der Verbindungsteile (102, 105, 107) mindestens ein die elastische Verformung erleichternder Längsschlitz (110) eingeformt ist.

6. Schaltgerät nach einem der Ansprüche 1 bis 5, dadurch gekennzeichnet, dass die erste Zusatzvorrichtung über eine dritte Steckverbindung mit dem Hilfsstromkreis einer zweiten Zusatzvorrichtung verbindbar ist, welche in eine Abdeckung (45) der Frontabdeckung (28) einsetzbar ist.

7. Schaltgerät nach Anspruch 6, dadurch gekennzeichnet, dass die zweite Zusatzvorrichtung als Strommessgerät ausgebildet ist und eine auf der Abdeckung (45) befestigte Anzeigevorrichtung (4) aufweist.

8. Schaltgerät nach Anspruch 7, dadurch gekennzeichnet, dass die Abdeckung (45) neben der Anzeigevorrichtung (4) als Treiber (9) und als Steuerungslogikschaltkreis (8) ausgebildete Hilfsstromkreise trägt.

## Claims

1. Switching apparatus, especially a low-voltage power switch, having a stationary part (10) which is arranged in a switch cabinet and includes power supply terminals (18) and power distribution terminals (19), having a moving housing body (20) for accommodating a switch mechanism (27) and a first additional device with an electrical auxiliary circuit which is supplied with electrical power by wiring which is passed from the stationary part (10) to the housing body (20), and having a disconnecting device which, by displacement of the housing body (20) in the switching apparatus, produces a disconnection point (disconnected position) or a DC connection between the stationary part (10) and the housing body (20) (connected position), the wiring having a first plug connection which opens during the transition from the connected position to the disconnected position and closes during the transition from the disconnected position to the connected position, the first plug connection having a first connecting part (107, 108) which is connected to the electrical power supply terminals (18), is preferably constructed as a plug socket and is inserted into the stationary part (2), as well as a second connecting part (105, 106) which can be connected to the auxiliary circuit in DC terms and includes a plug (C), characterized in that the mutually interacting parts (105, 107; 106, 108) thereof are inserted into mutually opposite sidewalls (11, A) of the stationary part (2) and of the housing body (3), in that the second connecting part (105, 106) is inserted into the housing body (3) and can be connected via a second plug connection to a third connecting part (102) which is inserted into a sidewall of a removable front cover (28) of the housing body (3) and is electrically conductively connected to the auxiliary circuit.

2. Switching apparatus according to Claim 1, characterized in that one seat (40, 43), which is used for accommodation of the associated connecting part (102, 105, 107) and is constructed in the form of a groove, is formed in the sidewall of the stationary part (2), of the housing body (3) and/or of the front cover (28) of the housing body in each case.

3. Switching apparatus according to Claim 2, characterized in that the seat (40, 43) is constructed in an undercut manner and preferably has a dovetail profile.

4. Switching apparatus according to one of Claims 2 or 3, characterized in that holding parts which are constructed as undercuts (42) are formed in the seat (40, 43) and holding parts which are constructed as flexible tabs (109) are formed in the connecting part (102, 105, 107), which holding parts engage with one another when the connecting part (102, 105, 107) is pushed in as far as the rear end of the groove (40, 43).

5. Switching apparatus according to one of Claims 1 to 4, characterized in that at least one longitudinal slot (110) which eases the elastic deformation is formed in at least one of the connecting parts (102, 105, 107).

6. Switching apparatus according to one of Claims 1 to 5, characterized in that the first additional device can be connected via a third plug connection to the auxiliary circuit of a second additional device which can be inserted into a cover (45) of the front cover (28).

7. Switching apparatus according to Claim 6, characterized in that the second additional device is constructed as an ammeter and has a display device (4) which is fastened on the cover (45).

8. Switching apparatus according to Claim 7, characterized in that, in addition to the display device (4) the cover (45) carries auxiliary circuits which are constructed as a driver (9) and as a control logic circuit (8).

## Revendications

1. Appareil de commutation, plus particulièrement un disjoncteur de puissance à basse tension, avec une partie fixe (10) disposée dans un coffret électrique et contenant des bornes d'alimentation (18) et de distribution (19) électrique, un corps de boîtier mobile (20) destiné à recevoir un mécanisme de commutation (27) et un premier dispositif supplémentaire avec un circuit électrique auxiliaire qui est alimenté en courant par un câblage amené sur le corps de boîtier (20) depuis la partie fixe (10), et un dispositif de déconnexion qui produit un point de déconnexion (position de déconnexion) ou une liaison galvanique de la partie fixe (10) et du corps de boîtier (20) (position rentrée) en faisant glisser le corps de boîtier (20) dans l'appareil de commutation, le câblage présentant un premier connecteur qui s'ouvre lors du passage de la position rentrée à la position de déconnexion et qui se ferme lors du passage de la position de déconnexion à la position rentrée, le premier connecteur présentant une première pièce de liaison (107, 108) raccordée aux bornes d'alimentation électrique (18), de préférence réalisée sous la forme d'une douille et insérée dans la partie fixe (2) et présente également une deuxième pièce de liaison (105, 106) pouvant être reliée galvaniquement au circuit auxiliaire et contenant une fiche (C), caractérisé par le fait
que ses pièces (105, 107 ; 106, 108) agissant conjointement sont insérées dans des parois latérales opposées (11, A) de la partie fixe (2) et du corps de boîtier (3), que la deuxième pièce de liaison (105, 106) est insérée dans le corps de boîtier (3) et peut être reliée, par le biais d'un deuxième connecteur, à une troisième pièce de liaison (102) qui est montée dans une paroi latérale d'un couvercle frontal (28) amovible du corps de boîtier (3) et qui peut être reliée électriquement avec le circuit auxiliaire.

2. Appareil de commutation selon la revendication 1, caractérisé par le fait qu'un siège (40, 43) réalisé en forme de rainure et servant à chaque fois à recevoir la pièce de liaison (102, 105, 107) correspondante est façonné dans la paroi latérale de la partie fixe (2), du corps de boîtier (3) et/ou du couvercle frontal (28) du corps de boîtier.

3. Appareil de commutation selon la revendication 2, caractérisé par le fait que le siège (40, 43) est réalisé sous la forme d'une contre-dépouille et présente de préférence un profil en queue d'aronde.

4. Appareil de commutation selon l'une des revendications 2 ou 3, caractérisé par le fait que des pièces de maintien sont réalisées sous la forme de contre-dépouilles (42) dans le siège (40, 43) et sous la forme de tenons (109) pliants dans la pièce de liaison (102, 105, 107), lesquelles pièces de maintien s'emboîtent l'une dans l'autre lorsque la pièce de liaison (102, 105, 107) est introduite jusqu'à l'extrémité arrière de la rainure (40, 43).

5. Appareil de commutation selon l'une des revendications 1 à 4, caractérisé par le fait qu'au moins une fente longitudinale (110) facilitant la déformation élastique est façonnée dans au moins l'une des pièces de liaison (102, 105, 107).

6. Appareil de commutation selon l'une des revendications 1 à 5, caractérisé par le fait que le premier dispositif supplémentaire peut être relié, par le biais d'un troisième connecteur, au circuit auxiliaire d'un deuxième dispositif supplémentaire qui peut être inséré dans un couvercle (45) du couvercle frontal (28).

7. Appareil de commutation selon la revendication 6, caractérisé par le fait que le deuxième dispositif supplémentaire est réalisé sous la forme d'un ampèremètre et présente un dispositif d'affichage (4) fixé sur le couvercle (45).

8. Appareil de commutation selon la revendication 7, caractérisé par le fait que le couvercle (45), en plus du dispositif d'affichage (4), comporte des circuits auxiliaires réalisés sous la forme d'un circuit d'attaque (9) et d'un circuit logique de commande (8).
